(19) Europäisches Patentamt
European Patent Office
Office européen des brevets

(11) **EP 3 044 172 B1**

(12) **EUROPEAN PATENT SPECIFICATION**

(45) Date of publication and mention
of the grant of the patent:
**16.01.2019 Bulletin 2019/03**

(21) Application number: **14777905.2**

(22) Date of filing: **11.09.2014**

(51) Int Cl.:
***C02F 3/00*** *(2006.01)*    ***C02F 3/28*** *(2006.01)*

(86) International application number:
**PCT/NL2014/050621**

(87) International publication number:
**WO 2015/037989 (19.03.2015 Gazette 2015/11)**

(54) **DIGESTION OF ORGANIC SLUDGE**

ABBAU VON KLÄRSCHLAMM

DIGESTION DE BOUE ORGANIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.09.2013 EP 13183965**

(43) Date of publication of application:
**20.07.2016 Bulletin 2016/29**

(73) Proprietor: **HaskoningDHV Nederland B.V.
3818 EX Amersfoort (NL)**

(72) Inventor: **KOORNNEEF, Eddie
NL-3818 EX Amersfoort (NL)**

(74) Representative: **Nederlandsch Octrooibureau
P.O. Box 29720
2502 LS The Hague (NL)**

(56) References cited:
**EP-A1- 0 135 486        EP-A2- 1 354 940
WO-A1-2011/089019    WO-A2-2011/112736
WO-A2-2011/143667    AU-B2- 665 138
ES-A1- 2 345 090        US-A1- 2004 172 878
US-A1- 2012 125 840**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The invention pertains to a process of treating organic substances such as wastewater treatment sludge, manure etc. by anaerobic digestion.

## Background

Organic waste streams or sludge, such as waste water treatment sludge, biomass waste streams, waste streams from food industry and the like, are commonly treated by anaerobic digestion so as to reduce the organic matter content and produce biogas. As used herein "sludge" is understood to mean any slurry or suspension of organic material, generally regarded as waste, in an aqueous medium, having a dry solids content between 2 and 12 wt.%, preferably between 3 and 9 wt.%. Such rather thick sludges are difficult to digest in conventional reactors for anaerobic digestion. The methane (in the biogas) can be used as a fuel for the energy input in the (digestion) processes at the wastewater treatment plant (WWTP), or sold externally.

The anaerobic digestion process has four main enzyme-catalysed stages: (1) hydrolysis by hydro lytic enzymes excreted by the microorganisms, resulting in breakdown of polymeric and glyceridic structures, in particular of proteins and polysaccharides, and fats, respectively, to small peptides, and amino acids, monomeric sugars such as glucose, and fatty acids; (2) acidogenesis, resulting in conversion of the products of hydrolysis to smaller fatty acids, lactic acid, alcohols (ethanol, methanol) and other ones; (3) acetogenesis, resulting in conversion of the smaller fatty acids and alcohols to carbon dioxide, hydrogen and acetic acid; and (4) methanogenesis, resulting in conversion of hydrogen, propionic acid and acetic acid to methane and carbon dioxide The latter three stages take place inside the cells of the corresponding bacteria. The first stage, hydrolysis, is usually the rate-limiting step of the breakdown process.

Anaerobic digestion is conventionally carried out in complete stirred tank reactors (CSTR). The shape and arrangement of the reactors, as well as the further process features, such as flow management, mixing, residence times, can vary widely. The process can be mesophilic, i.e. at temperatures between 25 and 45°C, typically around 36°C, or thermophilic, at temperatures between 45 and 60°C or even higher and typically around 55°C.

A drawback of performing anaerobic digestion in CSTR is that a part of the biomass which is to be digested is not involved in the entire process and leaves the reactor untreated. Also, the four stages of anaerobic digestion, from hydrolysis to methanogenesis, are performed simultaneously, resulting in sub-optimum process conditions for most if not all of the process stages. In addition, sludge retention times (SRT) and hydraulic retention times (HRT) are necessarily the same in CSTR, and as a result, optimum treatment of all sludge is usually not achievable.

Attempts to overcome the drawbacks of CSTR treatment for anaerobic digestion mainly focused on plug-flow treatment, or combinations of plug-flow and CSTR treatment. While such arrangements can result in higher efficiencies or conversion rates, they require relatively expensive equipment cost, because of the required high height/depth (H/D) ratios.

WO 03/006387 (= US 2004/0172878) discloses an installation for anaerobic conversion of 'dry' biomass into biogas wherein hydrolysis and methane fermentation are separated and fermentation is performed in two fermentation tanks, the first one operated at mesophilic and the second one at thermophilic temperatures. The recycle stream of this document is related to leak water from the conveyors and press water from the expeller; no sludge is recycled. WO 2011/112736 discloses an installation for producing biogas from biomass in anaerobic CSTR reactor(s). The oxidation-reduction potential (ORP), pH, temperature and gas production in the reactor are monitored and used for controlling the amount of biomass fed to the reactor, and the biomass retention time within the reactor is increased by a biomass recycle after separation of the liquid phase. No means, other than storage, for accommodating fluctuations in the incoming stream are suggested. Both documents do not provide for optimization of the different microbiological steps in the breakdown of (complex) organic substrates to mainly methane and carbon dioxide. EP2345090 describes a combination of pH and redox meters for controlling aerobic treatment of wastewater to optimize the removal of nitrogen and does not aim at controlling different stages in methane formation. US6,015,496 describes a method of wastewater treatment in a pipe network for collecting and transporting wastewater comprising the step of feeding conditioned sludge in the said pipe network, whereby the said conditioned sludge comprises organisms selected from the group consisting of nitrifying organisms, aerobic organisms, facultative organisms, anaerobic organisms, methanogenic organisms, and combinations thereof.

## Summary of the invention

It was found that the overall efficiency of anaerobic digestion of sludge as defined above can be significantly improved by combining the advantages of a CSTR treatment and a plug-flow process, by carrying out the anaerobic digestion in a series of at least three reactors, allowing the partial processes of the anaerobic digestion (hydrolysis, acidogenesis, acetogenesis and methanogenesis) to be performed under more optimum conditions. The conditions are further optimised by combining the improved reactor arrangement with a control of the flows between the reactors by means of reaction (pH, redox) and flow (sludge load, gas production) data input.

### *Description of the invention*

The invention thus pertains to a process and an installation for treating sludge by anaerobic digestion. In the process of the invention, the sludge is treated serially in at least three anaerobic reactors comprising a first, a second and a last reactor, wherein:

at least 50 vol% of the influent sludge stream is fed to said first reactor,
at least 85 vol% of the liquid effluent of said first reactor is fed to said second reactor,
at least 85 vol% of the liquid effluent of said second reactor is directly or indirectly fed to said last reactor, and
at least 85 vol% of the liquid effluent of said last reactor is disposed and/or optionally further treated, and
wherein a controlled variable part of the effluent of said last reactor is fed to said first reactor, and/or
a controlled variable part of the influent sludge stream is fed to said second reactor;
the level (volume per time unit) of said variable parts being controlled by means of the pH and/or redox values in at least said first reactor,
wherein the controlled variable part of the effluent of the last reactor which is fed to said first reactor is increased when the pH in the first reactor is 6.0 or below and/or the redox value in the first reactor is above - 330 mV, and decreased when the pH in the first reactor is above 6.8 and/or the redox value in the first reactor is below - 420 mV, and/or wherein the controlled variable part of the influent sludge stream which is fed to the second reactor is increased when the pH in the first reactor is 6.0 or below and the recyle flow to the first reactor is between 60 and 100% of the volume of the throughput, and the pH in the second reactor is 6.8 or above and/or the redox value in the first reactor is below -330 mV, and wherein the controlled variable part of the influent sludge stream which is fed to the second reactor is decreased when the pH in the second reactor is below 6.0 and/or the redox value in the second reactor is above -300 mV or the redox value in the first reactor is above - 330 mV, and decreased when the pH in the first reactor is above 6.8 and/or the redox value in the first reactor is below - 420 mV.

The process and the installation of the invention preferably comprise a third reactor between said second reactor and said last reactor, wherein a major part of the liquid effluent of said second reactor is fed to said last reactor via the third reactor, i.e. a major part of the liquid effluent - in particular the entire liquid effluent - of the second reactor is fed to the third reactor, and a major part of the liquid effluent of the third reactor is fed to the last reactor. If desired, a fifth and even a sixth reactor can be provided between the third and last reactors; however, such further reactors only marginally further improve the efficiency and/or the anaerobic conversion rate of the array of reactors.

While all stages of the anaerobic digestion can and will take place in each of the reactors, hydrolysis (stage 1) predominantly takes place in the first reactor and, to some extent, also in the second and even in the third reactor. Acidogenesis and acetogenesis take place in all reactors, and depend strongly on the production of intermediates formed by the hydrolysis process. Acidogenesis and acetogenesis are also strongly interdependent. Methanogenesis occurs in all reactors because acetic acid is formed in all stages, and it is the major process of the last reactor.

The organic material or sludge, as defined in the introductory part above, which is treated in the process of the invention, may e.g. be sludge issuing from an (aerobic or anaerobic) waste water treatment plant (WWTP), manure, biomass waste streams, waste streams from food industry and slaughter houses, and the like. The sludge may comprise various polysaccharides such as cellulose, hemicelluloses, starches, gums another fibres, as well as lower sugars, proteins, and fats, as well as lower levels of other biological materials such as alcohols, organic acids, hydrocarbons, lignins, etc., all of which are digested to at least some extent, depending of the degree of ready biodegradability.

Herein, the "liquid effluent" of a reactor is understood to mean the liquid and any solid or semi-solid material suspended or floating in the liquid. Thus the liquid includes most of the (organic/biological, i.e. comprising the bacteria and enzymes of the anaerobic flora) sludge present in the liquid. The transfer of such suspended or (semi)-solid material from one reactor to another is important in the present invention. Such suspended or solid material (sludge) is distinguished from the solid, non-digestible material which will settle in the reactor despite some mixing.

Usually, the solid material introduced in the anaerobic digestion system, also of the invention, will comprise such non-digestible, largely inorganic material, such as sand, clay-like material and precipitates, which will not be converted in the reactor system. This part may vary from about 10% to about 40% of the total dry solids of the influent. The heavier part of the inorganic material can be discharged from any of the reactors, preferably at least from the first reactor, by appropriate settling using the generally higher density of this inorganic material. The non-settling part of the inorganic material and the newly formed precipitates will leave the last reactor together with the effluent, and can be separated off downstream if desired.

In the process and the installation of the invention, solid material which is formed during the anaerobic digestion, in particular struvite (ammonium magnesium phosphate), can also be collected at the bottom of one or more of the reactors, preferably the second-last (e.g. the third of four) reactor. If necessary, magnesium, at levels corresponding to the stoichiometry of the phosphorus load of the treated sludge, can be introduced in the reactor(s), for optimum struvite yield and hence for optimum phosphate recovery. Magnesium can suitably be added as its salt, e.g. magnesium chloride, hydroxide, oxide, acetate or sulphate. By lowering the phosphate concentration during the digestion process by forming struvite in the digester itself, unplanned struvite formation after the digesters can be prevented.

The reactors are advantageously provided with controllable mixing devices, allowing the mixing of the sludge but also the ratio of SRT to HRT to be controlled. Preferably, at least the first and second reactors are provided with such mixing devices.

In an advantageous embodiment of the process and the installation of the invention, the at least three reactors are vertically separated compartments of a single tank. The single tank can effectively be a cylindrical container tank with three or four or even more radially separated compartments constituting the various reactors, but other shapes or even separated reactors for the different compartments are perfectly possible. The height of the reactors and of the tank is not critical for the operation of the anaerobic digestion, although a minimum height of 4 m is generally preferred. Typically heights are between 5 and 15 m for practical reasons, preferably between 6 and 11 m. The reduced height without any reduction of performance, compared to existing plug-flow digesters of the prior art, constitutes an important advantage of the invention. The tank diameter - for a cylindrical radially divided tank - may advantageously be between 10 and 25 m, preferably between 15 and 22 m, allowing an effective total reactor content of between 750 and 4000 $m^3$, preferably between 1500 and 3000 $m^3$. However, smaller and larger equipments will essentially be equally effective.

The "major part" (or "a" "major part", which is the same) of an effluent which is fed from one reactor to another reactor, as defined above, is at least 85% (by volume of the total effluent from the relevant reactor per time unit), preferably at least 90%, most preferably at least 96%. The "major part" of effluent which is disposed from the last reactor (and/or optionally further treated) is at least 50% (by volume of its total effluent, including any recycle), more preferably at least 70%, in particular at least 85%, even more in particular at least 90%. Under undisturbed steady operation with constant influent characteristics, the major parts may be 100% for some or all of the effluents, i.e. no recycling. The controlled variable ("minor") part which is fed from a downstream reactor to a more upstream reactor is therefore preferably less than 15 % (by volume), preferably less than 10%. The controlled variable parts which are recycled, are preferably mixed, i.e. contain essentially the same levels of sludge as the reactor content from which the part is discharged; if necessary, the reactor content is mixed before or while the variable part is being fed to an upstream reactor; on the other hand, recycling of part of the effluent from one reactor to a more upstream reactor can be done without upfront mixing of the reactor content, depending on the feed material, as long as at least a part of the semi-solid (suspended) material including the anaerobic bacteria, is carried along with the recycled effluent. Where reference is made herein to volumes per time unit or per day, this is to be understood as average volumes per time unit over a longer period of e.g. one or several hours or days, thus averaging possible short term differences resulting from recycle events being less frequent than loading events.

The controlled variable part of the effluent of said last reactor being fed to said first reactor is preferably somewhat higher than other recycle streams, in particular, it is at least 2 % in volume of said major part of the liquid effluent being disposed and/or further treated, per time unit, e.g. up to 10%. More preferably, e.g. in order to allow accommodation of more demanding and/or more fluctuating feed streams, the controlled variable part which is fed from the last reactor to the first (and optionally partly to the second) reactor is between 2 and 50% (by volume) of the total effluent issuing from the last reactor, even more preferably between 5 and 30%, most preferably between 10 and 20 % of the total effluent from the last reactor. In terms of total reactor content, the recycle rate is preferably between 0 and 15 vol.% of the total reactor content per day, more preferably 0.5-12.5 vol.% per day, most preferably between 1.25 and 7.5 vol.% or even between 2.5 and 5 vol.% per day.

Also a controlled variable part of the effluent of said last reactor can be fed to said second reactor. That part will generally be smaller than the part recycled from the last to the first reactor, unless acidity is too high, not only in the first reactor (pH too low, e.g. below 6.0, especially below 5.0), but also in the second reactor (pH e.g. below 6.5, especially below 6.0). The part recycled from the last to the second reactor is preferably between 0 and 50% of the total volume recycled from the last reactor (to the first and second reactors together), more preferably between 0 and 25% thereof, most preferably between 0 and 10% thereof, per time unit, e.g. per day. In terms of the total effluent issuing from the last reactor, the part being fed to the second reactor is preferably between 0 and 30% (by volume), more preferably between 0 and 10%, while it may be between 5 and 30%, preferably between 10 and 25% in case of too high acidity of the second reactor. In an alternative definition, the part fed from last to second reactor is preferably between 0 and 25% in volume, more preferably between 0 and 10 %, in volume of said major part of the liquid effluent being disposed and/or further treated, more preferably between 0 and 4 %. Most preferably essentially 0 vol.% per time unit (whether on the basis of total effluent, or total recycle, or non-recycled part, or on reactor content) is returned to the second reactor, if all the influent is being fed to the first reactor and if the pH in the second reactor is not decreasing. But if the pH of the second reactor decreases, the effluent of said last reactor can be fed to said second reactor to a maximum of 25 % in volume of the total recycle.

Alternatively or additionally, a controlled variable part of the effluent of said second last reactor (i.e. the reactor preceding the last reactor, which may be the second reactor, or, preferably, the third reactor) can be fed to the first reactor. This controlled part may for example be between 0 and 25 vol.%, preferably between 0 and 10 vol.%, preferably between 0 and 4 vol.% of the effluent of the second-last reactor.

As an exception, the "major part" of the influent sludge stream which is fed to the first reactor may be as low as 50%. The controlled variable part of the influent sludge stream being fed to said second reactor varies largely with the volume properties of the influent sludge stream. For example, if the influent sludge has already undergone hydrolysis to some extent or has a high amount of easily degradable material (peak load), the controlled part being directly fed ("by-passed") to the second reactor can be relatively high, as high as 50%. Preferably, under more steady conditions, the major part being fed to the first reactor and the controlled variable part being fed to the second reactor are more than 75% and less than 25%, respectively. Preferably, the controlled variable part ("minor part") of the influent being fed to the second reactor is as low as possible, depending on the amount that can be put through the first reactor, which will be controlled by pH and/or redox measurement.

An important feature of the process and the installation of the invention is the flow control from one reactor to another, including the bypasses and recycles, which can be achieved by measuring the pH and/or redox potential (oxidation-reduction potential, ORP) in at least the first two reactors, but preferably in all reactors. Also, influent and effluent flow rates, in particular the flow rate of the incoming sludge (by volume) and exiting (bio)gas (by volume), can be used for controlling the flow of the various recycles and bypasses. Thus, the level of said variable parts being fed from one reactor to another one, in particular from the last reactor to the first and/or second reactor, as well as from the influent to the second reactor, thereby bypassing the first reactor, are controlled by means of the pH and/or redox values measured in the first and second reactor in combination with the measured influent load to be treated and, preferably also on the basis of the measured gas production of the combined reactors, or of the individual reactors. The input data of pH, redox and flow rates is introduced into a data processor, which, once adjusted to the characteristics of the reactor array and the types and amounts of sludge to be treated, will translate the input to increases or decreases of one or more of the bypass or recycle flow rates by opening (widening) or closing (narrowing) the respective valves or by controlling the different pump flows.

As to the pH and the redox potential, it is commonly known that the $E_h$ and pH of a solution are related. For a half cell equation, conventionally written as reduction (electrons on the left side):

$$aA = bB + n[e^-] = h[H^+] = cC + dD$$

The half cell standard potential $E_0$ is given by:

$$E_0(\text{volts}) = -\frac{\Delta G^{\ominus}}{nF}$$

wherein $\Delta G^{\theta}$ is the standard Gibbs free energy change, $n$ is the number of electrons involved, and $F$ is Faraday's constant. The Nernst equation relates pH and $E_h$:

$$E_h = E_0 - 0.05916/n * \log\left( (\{A\}^a\{B\}^b)/(\{C\}^c\{D\}^d) \right) - 0.05916h/n *\text{pH}$$

where curly brackets indicate activities and exponents are shown in the conventional manner. This equation is the equation of a straight line for $E_h$ as a function of pH with a slope of $-0.05916h/n$ volt (pH has no units.) This equation predicts lower $E_h$ at higher pH values. This is observed for reduction of $O_2$ to $OH^-$ and for reduction of $H^+$ to H2.

A normal range for pH in anaerobic (CSTR) reactors is in the range of 6.0 - 8.0, where a pH of 6.0 is low, increasing the risk of acidification of the reactor. To prevent loss of activity by too low pH values, the recycle flow is controlled to keep the installation in optimum condition. A problem of only using the pH for monitoring performance and controlling flows is that pH values are influenced by the carbonate equilibrium in one direction (alkalinity of the reaction mixture) and in the opposite direction by the fatty acid concentrations, which makes the pH measurement alone not a very reliable value to control the digestion process. The redox measurement gives an indication of the total amount of oxidising and reducing ions in the medium and is less dependent on flattening effects of a few components. Depending of the influent flow and the speed of degradation, a lower pH (lower than 6.5 or even lower than 6.0) can be maintained for some time in the first and/or the second reactor.

The pH control of the recycle and bypass flows can for example be performed as follows: if the pH in the first reactor does not sufficiently drop compared to the influent pH, i.e. if it is around 7.3 or above and the recycle from the last reactor is low, this may indicate that the digestion capacity of the first reactor is insufficient, because of too complex influent components which need more hydrolysis time. In such case, the part of the influent being fed to the second reactor ("bypass") can be increased. When the pH decreases well below around 7.0, in particular below 6.8, the bypass flow can be decreased. If, on the other hand, the pH drop in the first reactor is too large, e.g. to 6.5 or lower, the recycle flow from the last reactor (and optionally to a minor extent from the second-last, e.g. third, reactor) can be increased, e.g. to around 25 %, or to 43% or even up to 100 % (by volume influent per day), which values correspond to up to 20%, or up to 30%, or even up to 50%, respectively, of the total effluent volume of the last reactor. Levels of 3-6% or even 6-10 % (by volume of the total effluent of the last reactor) are also feasible. When the pH rises above 6.8, the flow of the recycle part from the last reactor may be decreased.

Typically, the pH of the first reactor will be kept between 4.5 and 7.5, preferably between 5.0 and 7.3, in particular between 6.0 and 7.3. The pH of the second reactor will typically be between 6.0 and 8.0, preferably between 6.5 and 7.5. The pH of the third reactor (if there is one) and of any further reactors before the last one will typically be between 6.8 and 8.0, while the pH of the last reactor will preferably be between 7.0 and 8.0, ideally between 7.0 and 7.5. However, deviations outside these typical ranges can still be acceptable, at least temporarily, especially in the first and second reactors.

If the gas production increases above the maximum amount that can be treated per time unit, the flow of the incoming sludge can be reduced or the total incoming flow can be fed to only the first reactor instead of to the first two reactors. The degradability and thus the gas production will drop if the load of the first reactor increases above the optimum load. If the incoming flow is too high to be treated in only the first reactor, part of the flow can be put into the second reactor. Reduction of the flow of incoming sludge can be effected by diverting a part of the incoming sludge to a buffer tank and returning it e.g. when the gas production has decreased below the maximum level. In this way, the gas production data are used to adapt the various flows, bypasses and recycles. Also the gas composition can be used for this purpose. Thus a relatively high methane content of the total gas production, or especially of the gas issuing from the first and second reactor, is indicative of a relatively swift degradation process, allowing the recycle from the last to the first reactor(s) to be decreased, and/or the bypass of the first reactor to be adapted. Vice versa, a relatively low methane content compared to e.g. carbon dioxide content, of the of the total gas production, or especially of the gas issuing from the last (and possibly second-last) reactor, is indicative of a non-optimum degradation process, which can be improved by increasing the recycle from the last to the first reactor(s).

The redox control of the recycle and bypass flows can be performed similarly. For example, if the redox potential in the first reactor is relatively high (= less negative, e.g. > -330 mV, in particular > -300 mV), this is an indication of insufficient anaerobic capacity of the first reactor, and the recycle proportion of the effluent of the last reactor being fed to the first reactor is increased, up to around 20% or even up to 50% (based on total effluent of last reactor). If, on the other hand, the redox potential becomes too low, e.g. well below -420 mV, in particular < -450 mV, the recycle from the last reactor may be decreased and/or the bypass rate to the second reactor may be increased. The precise levels of the redox potential which should be used as an indicator and thus a controlling criterion for adjusting the various flows, will depend on the types of sludge, and can be routinely determined by the skilled person. As indicated above, an advantage of using the redox potential is that it is more directly indicative of the anaerobic digestion process, while the pH effect (acidification) may be offset by a higher alkalinity of the influent mixture. Therefore, both the pH and the redox potential are advantageously used for controlling the recycle and bypass flows.

Thus, in the process of the invention, the controlled variable part of the effluent of the last reactor which is fed to the first reactor can be increased when the pH in the first reactor is 6.0 or below and/or the redox value in the first reactor is above -330 mV, especially when it is above -300 mV. On the other hand the controlled variable part of the effluent of said last reactor being fed to the first reactor can be decreased when the pH in the first reactor is above 6.8 and/or the redox value in the first reactor is below -420 mV especially when it is below -450 mV.

Similarly, the controlled variable part of the influent sludge stream which is fed to the second reactor (i.e. bypassing the first reactor) can be increased when the pH in the first reactor is 6.0 or below and the recycle flow to the first reactor is between 60 and 100%, especially between 80 and 100 % of the throughput (i.e. of the same volume as the effluent which is disposed or further treated) and the pH in the second reactor is 6.8 or above and/or the redox value in the first reactor is below -330 mV or below -300 mV. The controlled variable part of the influent sludge stream which is fed to the second reactor is decreased when the pH in the second reactor is below 6.0 and/or the redox value in the second reactor is above -300 mV or above -330 mV.

It is possible, but generally unnecessary or even undesired, to provide pH control in the first reactor by addition of caustic or acid. It is strongly preferred, however, to control the pH in the various reactors, especially the first and second, by adjusting the bypass and/or recycle flows as described above.

The influent flows and effluent flows, and - where applicable - bypass and/or recycle flows are adjusted in such a way that the total hydraulic retention time (HRT) in the series of reactors (three, preferably four, or more) is between 3 and 10 days, preferably between 4 and 8 days. The HRT in each reactor (or compartment) is between 1 and 3 days, preferably between 1.25 days (30 h) and 2 days. Therefore, an increase of the recycle, e.g. from the last to the first reactor, is effected by discharging an additional flow from the last reactor for recycle, and keeping the flow rate of the non-recycled part of the effluent (to be discharged or further treated downstream) essentially constant.

The process of the invention can be performed in a continuous, semi-continuous or batch-wise mode. Preferably the process is operated in a semi-continuous mode, comprising a loading stage and a reaction stage. In the loading stage, a pre-determined volume of influent is loaded to the first reactor, and optionally also to the second reactor, and as a result, a similar volume is transferred from one reactor to the next reactor and a similar volume is discharged from the last reactor. In a first part of the reaction stage, the content of the reactors may be mixed, especially in the first and second reactor. In a second part of the reaction stage, mixing can be interrupted and solids are allowed to settle; however, at least part of the bacterial sludge will remain in suspension despite the interruption of the mixing, and will be transferred during the subsequent loading stage. The length of the various stages may vary; for instance, the loading stage may take between one minute or less up to e.g. 10 minutes, the mixing stage may be as short as e.g. 5 minutes or as long as e.g. an hour, and the settling stage may range from e.g. 10 minutes to one hour. During the settling stage, heavy solids - as distinguished from lighter (bacterial) sludge - will be collected at the bottom part of the reactor, and can be continuously or periodically discharged, e.g. before or during the loading stage. This applies particularly to struvite (having a specific density in the order of 1.5 to 1.7 $g/cm^3$), which is preferably precipitated - with the aid of added magnesium salts - in the last, or more preferably the second last (third) reactor. The recycling operations may be continuous, or they may coincide with the loading stages or they may be more frequent or less frequent than the loading stages.

The effluent of the last reactor can be treated in various ways, either anaerobically in a stirred tank reactor (CSTR) for polishing or directly to the final treatment of the sludge, like the dewatering installation. It is also feasible to feed the effluent of the last reactor to the first reactor of a second set of at least three anaerobic digesting reactors as described herein, i.e. using two sets of reactors of the invention in series. However, the use of a CSTR type reactor for polishing and accommodating surplus levels of influent sludge is preferred. In many cases it is possible to upgrade existing digestion installations by changing one of the digester tanks to a configuration of the new digester concept, especially in the embodiment where the four (or three or five) reactors are compartments of a single tank.

The installation for carrying out the anaerobic digestion of organic sludge of the invention can comprise an array of at least a first reactor, a second reactor and a last reactor. The first reactor is provided with a sludge inlet, a controllable mixer, a pH meter and/or a redox meter, a gas outlet, a liquid (overflow) outlet to said second reactor, a liquid overflow inlet from said last reactor and a solid outlet at the bottom. The second reactor is provided with a sludge inlet, a liquid overflow inlet from said first reactor, a controllable mixer, a pH meter and/or a redox, a gas outlet, a liquid overflow outlet to a third reactor or to said last reactor and preferably a solid outlet at the bottom. The last reactor is provided with a liquid (overflow) inlet from said second reactor or from a third or further intermediate reactor, a controllable mixer, a gas outlet, a liquid overflow outlet to said first reactor, a liquid overflow outlet for disposing liquid and a solid outlet at the bottom. Regulating devices are provided for regulating the flow of at least one of said liquid overflow outlets using pH and/or redox information input from said pH and/or redox meters, and preferably also input of incoming sludge flow data and discharge (bio)gas flow data. The gas collecting system of different compartments can be combined, and be provided with a gas flow measuring device.

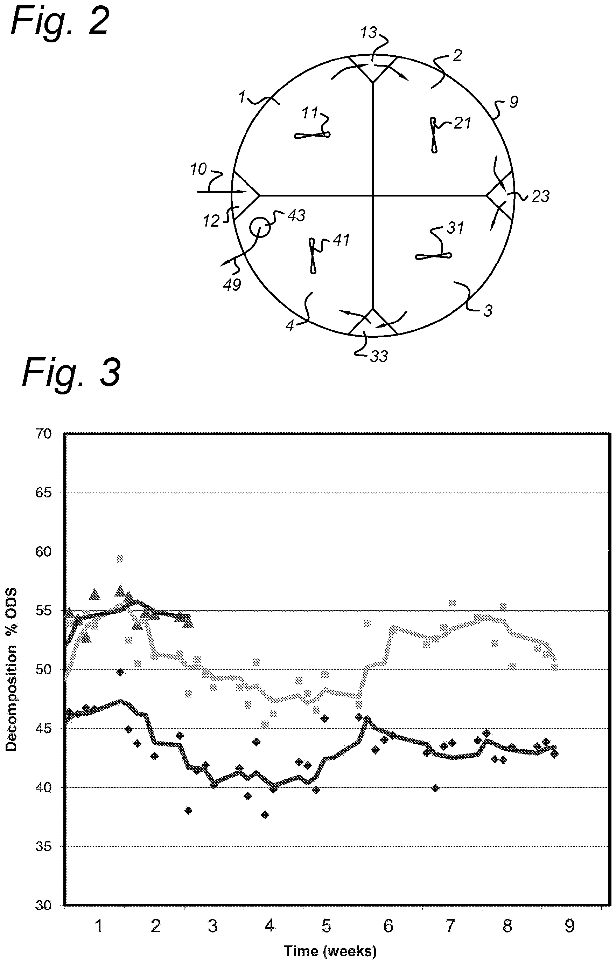

All reactors can be separate reactors or compartments in one or more tanks. For example, the array of reactors is advantageously a cylindrical container and said first reactor, second reactor, optional third reactor further intermediate reactors, and a last reactor are vertically separated compartments of said cylindrical container. The connecting lines (outlet from first reactor to inlet to second reactor; outlet from second reactor to inlet to next (third) reactor; etc.) can be vertical subsectors or pipes neighbouring the respective two reactors, wherein the outlet from the preceding reactor is an overflow at the top and the inlet into the next reactor is at the bottom, as further shown in Figure 2.

The installation as defined preferably further comprises, in said array, a third reactor provided with a liquid overflow inlet from said second first reactor, a controllable mixer, a gas outlet, a liquid overflow outlet to said last reactor, and a solid outlet at the bottom. The solid outlets at the bottom of the various reactors, especially the first and the last reactor, can simply be openings at the lowest point of the bottom of the reactor, which may be flat or, preferably inclined, and may be provided with devices to move the solids to the outlet opening, such as pumps or jet streams, if desired.

The installation can also advantageously be provided with a buffer tank which can be connected to the sludge supply line by controllable valves for diverting part of the incoming sludge to be stored in the buffer tank and, later on, returning the stored sludge to the supply line for feeding to the array of reactors.

### Description of the figures

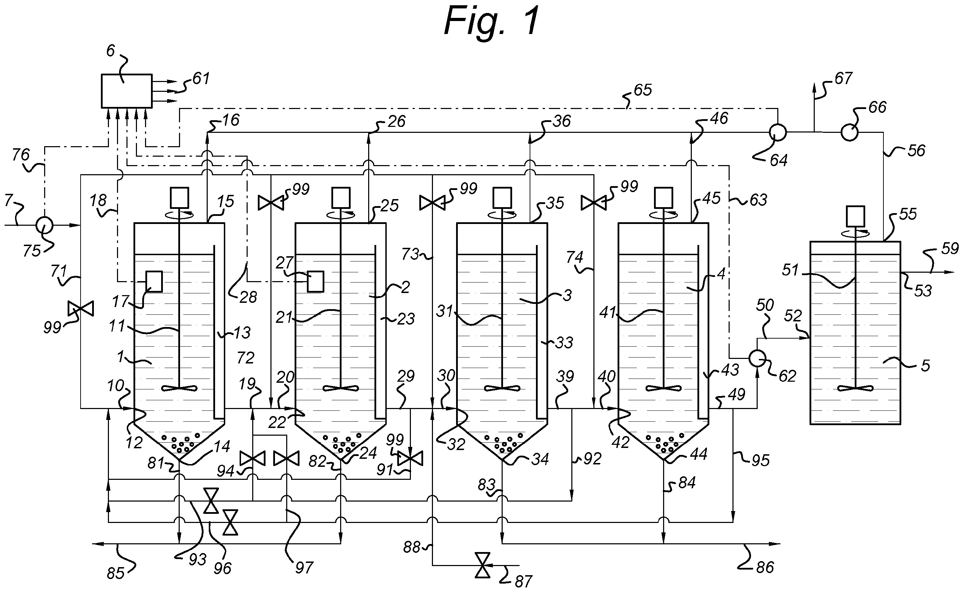

Figure 1 shows a set of reactors according to the invention. The figure shows an installation having four anaerobic reactors, 1, 2, 3, 4. Each reactor is equipped with a mixing unit (11, 21, 31, 41), a liquid/sludge inlet (12, 22, 32, 42), a liquid/sludge outlet (13, 23, 33, 43), a solid outlet at the bottom (14, 24, 34, 44), which may be provided with means for directing solids towards the outlet, such as a jet stream (not shown), a gas outlet (15, 25, 35, 45), connected to gas lines (16, 26, 36, 46), a pH and/or redox meter (17, 27, only shown for reactors 1 and 2), and liquid/sludge lines (10, 19-20, 29-30, 39-40, 49) feeding and discharging the major parts of the sludge to and from the reactors. The liquid/sludge outlets 13, 23, 33, 43 are arranged as overflow pipes in the Figure, which may be located inside or outside the reactor.

Incoming sludge 7 is fed to the first reactor through line 71 after passing flow meter 75. Bypass lines 72, 73, and 74 may be provided to pass a minor part of the incoming sludge to the second, and optionally the third and fourth reactor, the various flows being controlled by valves 99. Outlet lines 29, 39 and 49 are provided with side lines 91, 92, 95, for recycling a minor part of the effluent of the second, third and fourth reactor, respectively, to the first and optionally second reactor, wherein lines 92 and 95 may be divided into lines 93, 94 and 96, 97, respectively.

Solids from the first, and optionally the second reactor (and exceptionally the third, not shown), discharged from outlets 14 and 24 respectively, largely consist of sand and other inorganic solids present in the starting sludge, and are carried off through lines 81 and 82, to a inorganic solids disposal 85 or to the digested sludge buffer. Solids from the fourth and/or third (and exceptionally the second reactor, not shown) discharged from outlets 34 and 44 respectively, largely consist of struvite formed in the respective reactor(s), typically the third reactor, and are carried off through lines 83 and 84, to a struvite disposal 86. A magnesium salt (e.g. magnesium chloride) supply 87 is fed to the third reactor through line 88. Instead of being combined with feed line 40 of reactor 3, it may enter reactor 3 elsewhere, or it may be fed to reactor 4, e.g. combined with feed line 40.

Gas issuing from the various reactors is carried off through lines 16, 26, 36 and 46, and after being combined, passes through a flow meter (64), which may also contain a unit for assaying the gas composition, and is fed to a biogas collecting unit 67. Both the gas flow rates and the gas compositions can also be measured for the gas streams from the individual reactors, i.e. by flow meters and gas composition assaying units in the individual lines 16, 26, 36 and 46 (not shown).

Data from the pH and redox meters 17, 27, the incoming sludge flow indicator 75, the gas effluent flow (and optionally composition) indicators 64 (which may also be indicators in the individual lines 16, 26, 36 and 46) and optionally 66 and optionally the liquid effluent flow indicator 62, are fed through connections 18, 28, 76, 63, 65, respectively (which may be wired or wireless) to data processing and control unit 6. Controlling signals for the various valves 99 and mixing devices 11, 21, 31, 41 are transmitted from the processing and control unit 66 through exits 61 (lines to the valves not shown).

Downstream of the set of anaerobic reactors, a finishing reactor, such as a CSTR reactor 5 may be provided. It has feed line 50, mixing device 51, liquid inlet 52, liquid outlet 53, gas outlet 55 connected to the biogas collecting unit 67 through line 56 and indicator 66. The treated liquid is discharged through line 59, and either post-treated or discharged.

Figure 2 shows a cross-sectional view of an alternative arrangement of the installation of the invention, wherein reactors 1, 2, 3 and 4 are compartments of a cylindrical tank 9. The same numbers as in Figure 1 represent the same parts. Thus, each compartment is equipped with a mixing device 11, 21, 31, 41, and further with similar inlets, outlets, lines, valves, gauges and devices as in Figure 1 (not separately shown in Figure 2). Incoming sludge through supply line 10 is introduced into column 12, which serves as a sludge inlet for reactor 1 though an overflow, or through an external line including a pump. Overflow outlets 13, 23 and 23 provide the connection between the reactors, thus avoiding separate (external lines). Reactor 4 is provided with a sludge outlet in the form of shaft 43, from which the sludge is carried off to a sludge buffer preceding a dewatering installation/unit through line 49.

Figure 3 shows the comparative results in terms of breakdown of sludge (% Organic Dry Substance: ODS) during 9 weeks of operation of the process of the invention (■), a reference process using a CSTR only (♦), and a digester with a Thermal Pressure Hydrolysis unit (▲). The curves are drawn using moving averages over 4 days.

*Example*

Since 2011 the applicant has been testing the new digester concept of the invention with many different sludges in comparison of a reference reactor without any additional treatment. The comparative tests were conducted under fully controllable circumstances. Each test consists of a period of stabilization in which 20 litre CSTR Lab reactors are compared with the full scale installation on the WWTP. To achieve an HRT of e.g. 20 days in the CSTR Lab reactors, 1 liter of feed sludge originating from a digester of a WWTP is daily pumped into the reactors in a semi-continuously way. If the CSTR Lab reactor results are comparable with the full scale CSTR results, the new digester concept is placed in front of one of the two Lab CSTR reactors. This new digester concept with a HRT of 6 days is filled with digested sludge from the previous stabilization period. The reference reactor is kept under the same conditions during the whole test period. After placing the new digester concept of 8.5 1 in front of the CSTR, the feed flow is increased to 1.43 1/d to keep the overall HRT at 20 days.

The results are presented in Figure 3. During this test period also the effect of Thermal Pressure Hydrolysis (TPH) was tested in a third parallel reactor, where sludge was pre-treated at 160 °C at 6-8 bar during 2 hours. The TPH technology for reductive treatment of organic waste is described e.g. WO96/09882 (Cambi). As can be seen in the graph, the new digester concept results are close to that of the TPH treatment. The advantage of the new digester concept in comparison with TPH is that no high pressures or high temperatures are necessary which is highly desirable for a positive energy balance.

During the test period the average breakdown in the reference reactor was 42 % and in the combination of the new digester concept and a CSTR 50%. In the TPH reactor, the organic matter reduction amounted to 53 %. If these results are translated to a full scale installation, only the new digester concept gives a positive contribution to significantly lower the operational costs of the WWTP, since no additional energy is needed like for TPH.

**Claims**

1.  A process for treating organic sludge by anaerobic digestion, comprising serially treating the sludge in at least three anaerobic reactors comprising a first, a second and a last reactor, wherein at least 50 vol% of the influent sludge stream is fed to said first reactor,
    at least 85 vol% of the liquid effluent of said first reactor is fed to said second reactor,
    at least 85 vol% of the liquid effluent of said second reactor is directly or indirectly fed to said last reactor, and
    at least 85 vol% of the liquid effluent of said last reactor is disposed and/or optionally further treated, and
    wherein a controlled variable part of the effluent of said last reactor is fed to said first reactor, and/or
    a controlled variable part of the influent sludge stream is fed to said second reactor; the level (volume per time unit) of said variable parts being controlled by means of the pH and/or redox values in at least said first reactor,
    wherein the controlled variable part of the effluent of the last reactor which is fed to said first reactor is increased when the pH in the first reactor is 6.0 or below and/or the redox value in the first reactor is above - 330 mV, and decreased when the pH in the first reactor is above 6.8 and/or the redox value in the first reactor is below - 420 mV, and/or wherein the controlled variable part of the influent sludge stream which is fed to the second reactor is increased when the pH in the first reactor is 6.0 or below and the recyle flow to the first reactor is between 60 and 100% of the volume of the throughput, and the pH in the second reactor is 6.8 or above and/or the redox value in the first reactor is below -330 mV, and wherein the controlled variable part of the influent sludge stream which is fed to the second reactor is decreased when the pH in the second reactor is below 6.0 and/or the redox value in the second reactor is above -300 mV or the redox value in the first reactor is above - 330 mV, and decreased when the pH in the first reactor is above 6.8 and/or the redox value in the first reactor is below - 420 mV.

2.  The process according to claim 1, wherein said at least three reactors are four or more reactors and comprise a third reactor between said second reactor and said last reactor, wherein the at least 85 vol% of the liquid effluent of said second reactor being fed to said third reactor, and wherein at least 85 vol% of the liquid effluent of said third reactor being directly or indirectly fed to said last reactor.

3.  The process according to claim 1 or 2, wherein said at least three reactors are vertically separated compartments of a single tank.

4.  The process according to claim 3, wherein said single tank has a height of between 5 and 15 m, preferably between 6 and 11 m.

5.  The process according to any one of the preceding claims, wherein the levels of said variable parts are further controlled by means of the pH and/or redox values in said second reactor.

6.  The process according to any one of the preceding claims, wherein the level of said variable parts are further controlled by means of the influent sludge stream load and/or the flow rate of the gas collected from the combined or individual reactors.

7.  The process according to any one of the preceding claims, wherein at least one of said reactors is provided with controllable mixing devices.

8.  The process according to any one of the preceding claims, wherein struvite is collected at the bottom of said last and/or said third reactor.

9.  The process according to any one of the preceding claims, wherein said controlled variable part of the effluent of said last reactor being fed to said first reactor is between 2 and 10 % in volume of said at least 50 vol% of the liquid effluent being disposed and/or further treated, per time unit.

10. The process according to any one of the preceding claims, wherein the effluent of said last reactor is treated in a stirred tank reactor.

11. The process according to any one of the preceding claims, wherein the total hydraulic retention time (HRT) in the series of reactors is between 3 and 10 days, preferably between 4 and 8 days.

12. An installation for anaerobic digestion of organic sludge, comprising an array of at least a first reactor, a second reactor and a last reactor,
said first reactor being provided with inlet from the sludge supply, a controllable mixer, a pH meter and/or a redox meter, a gas outlet, a liquid overflow outlet to said second reactor, a liquid inlet from said last reactor and a solid outlet at the bottom; said second reactor being provided with a sludge inlet, a liquid overflow inlet from said first reactor, a controllable mixer, a pH meter and/or a redox meter, a gas outlet, a liquid overflow outlet to a third reactor or to said last reactor and a solid outlet at the bottom;
said last reactor being provided with a liquid overflow inlet from said second reactor or from a third or further reactor, a controllable mixer, a gas outlet, a liquid outlet to said first reactor, a liquid overflow outlet for disposing liquid and a solid outlet at the bottom; wherein regulating devices are provided which devices regulate the flow of at least said liquid inlet from said last reactor in said first reactor and said liquid inlet from the sludge supply in said second reactor, wherein said devices regulate the flow of said liquid inlet from said last reactor in said first reactor based on pH and/or redox information input from the pH and/or redox meter of the first reactor, and wherein said devices regulate the flow of said liquid inlet from the sludge supply in said second reactor based on pH and/or redox information input from the pH and/or redox meter of the first reactor and the second reactor.

13. The installation according to claim 12, further comprising in said array a third reactor provided with a liquid overflow inlet from said second reactor, a controllable mixer, a gas outlet, a liquid overflow outlet to said last reactor and a solid outlet at the bottom.

14. The installation according to claim 12, wherein said array is a cylindrical tank and said first reactor, second reactor, optional third reactor and a last reactor are vertically separated compartments of said cylindrical tank.

**Patentansprüche**

1. Prozess zur Behandlung von Klärschlamm durch anaerobe Zersetzung, mit einer seriellen Behandlung des Schlamms in mindestens drei anaeroben Reaktoren mit einem ersten, einem zweiten und einem letzten Reaktor, wobei mindestens 50 Vol.-% des zufließenden Schlammstroms dem ersten Reaktor zugeführt werden, mindestens 85 Vol.-% des Flüssigkeitsausflusses des ersten Reaktors dem zweiten Reaktor zugeführt werden, mindestens 85 Vol.-% des Flüssigkeitsausflusses des zweiten Reaktors direkt oder indirekt dem letzten Reaktor zugeführt werden, und
mindestens 85 Vol.-% des Flüssigkeitsausflusses des letzten Reaktors entsorgt und/oder optional weiterbehandelt werden, und
wobei ein gesteuerter variabler Teil des Ausflusses des letzten Reaktors dem ersten Reaktor zugeführt wird, und/oder ein gesteuerter variabler Teil des zufließenden Schlammstroms dem zweiten Reaktor zugeführt wird;
der Pegel (Volumen pro Zeiteinheit) der variablen Teile mittels des pH-Wertes und/oder Redox-Werten zumindest im ersten Reaktor gesteuert werden,
wobei der gesteuerte variable Teil des Ausflusses des letzten Reaktors, der dem ersten Reaktor zugeführt wird, erhöht wird, wenn der pH-Wert in dem ersten Reaktor 6,0 oder niedriger ist und/oder der Redox-Wert in dem ersten Reaktor über -330 mV liegt, und verringert wird, wenn der pH-Wert in dem ersten Reaktor über 6,8 liegt und/oder der Redox-Wert in dem ersten Reaktor unter -420 mV liegt,
und/oder wobei der gesteuerte variable Teil des zufließenden Schlammstroms, der dem zweiten Reaktor zugeführt wird, erhöht wird, wenn der pH-Wert in dem ersten Reaktor 6,0 oder kleiner ist und der Rezirkulationsstrom zu dem ersten Reaktor zwischen 60 und 100 % des Volumens des Durchsatzes beträgt, und der pH-Wert in dem zweiten Reaktor 6,8 oder größer ist und/oder der Redox-Wert in dem ersten Reaktor unter -330 mV liegt, und wobei der gesteuerte variable Teil des zufließenden Schlammstroms, der dem zweiten Reaktor zugeführt wird, verringert wird, wenn der pH-Wert in dem zweiten Reaktor unter 6,0 liegt und/oder der Redox-Wert in dem zweiten Reaktor über -300 mV liegt, oder der Redox-Wert in dem ersten Reaktor über -300 mV liegt, und verringert wird, wenn der pH-Wert in dem ersten Reaktor über 6,8 liegt und/oder der Redox-Wert in dem ersten Reaktor unter -420 mV liegt.

2. Prozess nach Anspruch 1, wobei die mindestens drei Reaktoren vier oder mehr Reaktoren sind und einen dritten Reaktor zwischen dem zweiten Reaktor und dem letzten Reaktor aufweisen, wobei die mindestens 85 Vol.-% des Flüssigkeitsausflusses des zweiten Reaktors dem dritten Reaktor zugeführt werden, und wobei mindestens 85 Vol.-% des Flüssigkeitsausflusses des dritten Reaktors direkt oder indirekt dem letzten Reaktor zugeführt werden.

3. Prozess nach Anspruch 1 oder 2, wobei die mindestens drei Reaktoren vertikal getrennte Kammern eines einzigen Behälters sind.

4. Prozess nach Anspruch 3, wobei der einzige Behälter eine Höhe zwischen 5 und 15 m, vorzugsweise zwischen 6 und 11 m, hat.

5. Prozess nach einem der vorhergehenden Ansprüche, wobei die Pegel der variablen Teile durch den pH-Wert und/oder den Redox-Wert in dem zweiten Reaktor gesteuert werden.

6. Prozess nach einem der vorhergehenden Ansprüche, wobei die Pegel der variablen Teile ferner durch die Menge des zufließenden Schlammstroms und/oder die Durchflussrate des Gases, das aus den kombinierten oder einzelnen Reaktoren gesammelt wird, gesteuert werden.

7. Prozess nach einem der vorhergehenden Ansprüche, wobei mindestens einer der Reaktoren mit steuerbaren Mischeinrichtungen versehen ist.

8. Prozess nach einem der vorhergehenden Ansprüche, wobei Struvit an dem Boden des letzten und/oder des dritten Reaktors gesammelt wird.

9. Prozess nach einem der vorhergehenden Ansprüche, wobei der gesteuerte variable Teil des Ausflusses des letzten Reaktors, der dem ersten Reaktor zugeführt wird, zwischen 2 und 10 % des Volumens der mindestens 50 Vol.-% des Flüssigkeitsausflusses, der entsorgt und/oder weiterbehandelt wird, pro Zeiteinheit liegt.

10. Prozess nach einem der vorhergehenden Ansprüche, wobei der Ausfluss des letzten Reaktors in einem Behälterreaktor mit Rührwerk behandelt wird.

11. Prozess nach einem der vorhergehenden Ansprüche, wobei die gesamte hydraulische Verweildauer (HRT) in der Reihe der Reaktoren zwischen 3 und 10 Tagen, vorzugsweise zwischen 4 und 8 Tagen, liegt.

12. Anlage zur anaeroben Zersetzung von Klärschlamm mit einer Anordnung aus mindestens einem ersten Reaktor, einem zweiten Reaktor und einem letzten Reaktor,
wobei der erste Reaktor mit einem Einlass aus der Schlammzufuhr, einem steuerbaren Mischer, einem pH-Messgerät und/oder einem Redox-Messgerät, einem Gasauslass, einem Flüssigkeitsüberlaufauslass zu dem zweiten Reaktor, einem Flüssigkeitseinlass aus dem letzten Reaktor und einem Feststoffauslass an dem Boden versehen ist;
der zweite Reaktor mit einem Schlammeinlass, einem Flüssigkeitsüberlaufeinlass aus dem ersten Reaktor, einem steuerbaren Mischer, einem pH-Messgerät und/oder einem Redox-Messgerät, einem Gasauslass, einem Flüssigkeitsüberlaufauslass zu einem dritten Reaktor oder zu dem letzten Reaktor und einem Feststoffauslass an dem Boden versehen ist;
der letzte Reaktor mit einem Flüssigkeitsüberlaufeinlass aus dem zweiten Reaktor oder aus einem dritten oder einem weiteren Reaktor, einem steuerbaren Mischer, einem Gasauslass, einem Flüssigkeitsauslass zu dem ersten Reaktor, einem Flüssigkeitsüberlaufauslass zum Entsorgen von Flüssigkeit und einem Feststoffauslass an dem Boden versehen ist; wobei Regelungseinrichtungen vorgesehen sind, die den Durchfluss zumindest des Flüssigkeitseinlasses aus dem letzten Reaktor in den ersten Reaktor und den Flüssigkeitseinlass aus der Schlammzufuhr in dem zweiten Reaktor steuern, wobei die Einrichtungen den Durchfluss des Flüssigkeitseinlasses aus dem letzten Reaktor in den ersten Reaktor auf der Grundlage einer pH- und/oder einer Redox-Information, die aus dem pH-Messgerät und/oder dem Redox-Messgerät des ersten Reaktors erhalten werden, steuern, und wobei die Einrichtungen den Durchfluss des Flüssigkeitseinlasses aus der Schlammzufuhr in dem zweiten Reaktor auf der Grundlage von pH- und/oder Redox-Information steuern, die aus dem pH- und/oder Redox-Messgerät des ersten Reaktors und des zweiten Reaktors erhalten wird.

13. Anlage nach Anspruch 12, die ferner in der Anordnung einen dritten Reaktor aufweist, der mit einem Flüssigkeitsüberlaufeinlass aus dem zweiten Reaktor, einem steuerbaren Mischer, einem Gasauslass, einem Flüssigkeitsüberlaufauslass zu dem letzten Reaktor und einem Feststoffauslass an dem Boden versehen ist.

14. Anlage nach Anspruch 12, wobei die Anordnung ein zylindrischer Behälter ist und der erste Reaktor, der zweite Reaktor, der optionale dritte Reaktor und der letzte Reaktor vertikal getrennte Kammern des zylindrischen Behälters sind.

**Revendications**

1. Procédé de traitement de boue organique par digestion anaérobie, comprenant le traitement en série de la boue dans au moins trois réacteurs anaérobies comprenant un premier, un deuxième et un dernier réacteur, dans lequel au moins 50 % en volume du courant de boue affluent est introduit dans ledit premier réacteur,
au moins 85 % en volume de l'effluent liquide dudit premier réacteur est introduit dans le deuxième réacteur,
au moins 85 % en volume de l'effluent liquide dudit deuxième réacteur est directement ou indirectement introduit dans ledit dernier réacteur, et
au moins 85 % en volume de l'effluent liquide dudit dernier réacteur est éliminé et/ou soumis de manière facultative à un traitement supplémentaire, et
dans lequel une partie variable commandée de l'effluent dudit dernier réacteur est introduite dans ledit premier réacteur, et/ou
une partie variable commandée du courant de boue affluent est introduite dans ledit deuxième réacteur ;
le niveau (volume par unité de temps) desdites parties variables étant commandé par l'intermédiaire des valeurs de pH et/ou redox dans au moins ledit premier réacteur,
dans lequel la partie variable commandée de l'effluent du dernier réacteur qui est introduite dans ledit premier réacteur est augmentée lorsque le pH dans le premier réacteur est égal ou inférieur à 6,0 et/ou lorsque la valeur redox dans le premier réacteur est supérieure à -330 mV, et diminuée lorsque le pH dans le premier réacteur est supérieur à 6,8 et/ou lorsque la valeur redox dans le premier réacteur est inférieure à -420 mV,
et/ou dans lequel la partie variable commandée du courant de boue affluent qui est introduite dans le deuxième réacteur est augmentée lorsque le pH dans le premier réacteur est égal ou inférieur à 6,0 et l'écoulement de recyclage dans le premier réacteur est compris entre 60 et 100 % du volume du débit, et le pH dans le deuxième réacteur est égal ou supérieur à 6,8 et/ou la valeur redox dans le premier réacteur est inférieure à -330 mV, et dans lequel la partie variable commandée du courant de boue affluent qui est introduite dans le deuxième réacteur est diminuée lorsque le pH dans le deuxième réacteur est inférieur à 6,0 et/ou lorsque la valeur redox dans le deuxième réacteur est supérieure à -300 mV ou la valeur redox dans le premier réacteur est supérieure à -330 mV, et diminuée lorsque le pH dans le premier réacteur est supérieur à 6,8 et/ou lorsque la valeur redox dans le premier réacteur est inférieure à -420 mV.

2. Procédé selon la revendication 1, dans lequel lesdits au moins trois réacteurs sont quatre ou plus de quatre réacteurs et comprennent un troisième réacteur entre ledit deuxième réacteur et ledit dernier réacteur, dans lequel au moins 85 % en volume de l'effluent liquide dudit deuxième réacteur est introduit dans ledit troisième réacteur, et dans lequel au moins 85 % en volume de l'effluent liquide dudit troisième réacteur est directement ou indirectement introduit dans ledit dernier réacteur.

3. Procédé selon la revendication 1 ou 2, dans lequel lesdits au moins trois réacteurs sont des compartiments séparés verticalement d'un réservoir unique.

4. Procédé selon la revendication 3, dans lequel ledit réservoir unique a une hauteur comprise entre 5 et 15 m, de préférence entre 6 et 11 m.

5. Procédé selon l'une quelconque des revendications précédentes, dans lequel les niveaux desdites parties variables sont en outre commandés par l'intermédiaire des valeurs de pH et/ou redox dans ledit deuxième réacteur.

6. Procédé selon l'une quelconque des revendications précédentes, dans lequel le niveau desdites parties variables est en outre commandé par l'intermédiaire de la charge du courant de boue affluent et/ou du débit du gaz collecté à partir de réacteurs combinés ou individuels.

7. Procédé selon l'une quelconque des revendications précédentes, dans lequel au moins l'un desdits réacteurs est muni de dispositifs de mélange pouvant être commandés.

8. Procédé selon l'une quelconque des revendications précédentes, dans lequel de la struvite est collectée au fond dudit dernier et/ou dudit troisième réacteur.

9. Procédé selon l'une quelconque des revendications précédentes, dans lequel ladite partie variable commandée de l'effluent dudit dernier réacteur introduite dans ledit premier réacteur représente entre 2 et 10 % en volume dudit au moins 50 % en volume de l'effluent liquide qui est éliminé et/ou soumis à un traitement supplémentaire, par unité de temps.

10. Procédé selon l'une quelconque des revendications précédentes, dans lequel l'effluent dudit dernier réacteur est traité dans un réacteur à réservoir agité.

11. Procédé selon l'une quelconque des revendications précédentes, dans lequel le temps de rétention hydraulique total (HRT) dans la série de réacteurs est compris entre 3 et 10 jours, de préférence entre 4 et 8 jours.

12. Installation de digestion anaérobie de boue organique, comprenant un réseau constitué d'au moins un premier réacteur, un deuxième réacteur et un dernier réacteur,
ledit premier réacteur étant muni d'une entrée provenant de l'alimentation en boue, d'un mélangeur pouvant être commandé, d'un pH-mètre et/ou d'un dispositif de mesure redox, d'une sortie de gaz, d'une sortie de trop-plein de liquide vers ledit deuxième réacteur, d'une entrée de liquide provenant dudit dernier réacteur et d'une sortie de matières solides au fond ;
ledit deuxième réacteur étant muni d'une entrée de boue, d'une entrée de trop-plein de liquide provenant dudit premier réacteur, d'un mélangeur pouvant être commandé, d'un pH-mètre et/ou d'un dispositif de mesure redox, d'une sortie de gaz, d'une sortie de trop-plein de liquide vers un troisième réacteur ou vers ledit dernier réacteur et une sortie de matières solides au fond ;
ledit dernier réacteur étant muni d'une entrée de trop-plein de liquide provenant dudit deuxième réacteur ou d'un troisième ou autre réacteur, d'un mélangeur pouvant être commandé, d'une sortie de gaz, d'une sortie de liquide vers ledit premier réacteur, d'une sortie de trop-plein de liquide pour éliminer un liquide et d'une sortie de matières solides au fond ; dans laquelle des dispositifs de régulation sont agencés lesquels dispositifs régulent l'écoulement d'au moins ladite entrée de liquide provenant dudit dernier réacteur dans ledit premier réacteur et ladite entrée de liquide provenant de l'alimentation en boue dans ledit deuxième réacteur, dans laquelle
lesdits dispositifs régulent l'écoulement de ladite entrée de liquide provenant dudit dernier réacteur dans ledit premier réacteur sur la base d'informations de pH et/ou redox entrées par le dispositif de mesure de pH et/ou redox du premier réacteur, et dans lequel lesdits dispositifs régulent l'écoulement de ladite entrée de liquide provenant de l'alimentation en boue dans ledit deuxième réacteur sur la base d'informations de pH et/ou redox entrées par le dispositif de mesure de pH et/ou redox du premier réacteur et du deuxième réacteur.

13. Installation selon la revendication 12, comprenant en outre dans ledit réseau un troisième réacteur muni d'une entrée de trop-plein de liquide provenant dudit deuxième réacteur, d'un mélangeur pouvant être commandé, d'une sortie de gaz, d'une sortie de trop-plein de liquide vers ledit dernier réacteur et d'une sortie de matières solides au fond.

14. Installation selon la revendication 12, dans laquelle ledit réseau est un réservoir cylindrique et lesdits premier réacteur, deuxième réacteur, troisième réacteur facultatif et un dernier réacteur sont des compartiments séparés verticalement dudit réservoir cylindrique.

*Fig. 1*

EP 3 044 172 B1

*Fig. 2*

*Fig. 3*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03006387 A
- US 20040172878 A
- WO 2011112736 A
- EP 2345090 A
- US 6015496 A
- WO 9609882 A